# EUROPEAN PATENT APPLICATION

(11) **EP 2 110 911 A2**
(43) Date of publication of application: **21.10.2009**
(21) Application number: 09157365.9
(22) Date of filing: 06.04.2009
(51) Int. Cl.: H02G 3/00, H02G 11/00

(54) **Element for forming a cable guide and associated cable guide**

(30) Priority: 15.04.2008 IT MI20080666
(71) Applicant: Caimi Brevetti S.p.A., 20054 Nova Milanese (MI) (IT)
(72) Inventor: Iacchetti, Giulio, 20139 Milano (IT)
(74) Representative: Colombo, Stefano Paolo

(57) **Abstract**

A base element for forming a cable guide is described. The element comprises:
• a first head piece with first engaging members;
• a second head piece with second engaging members;
• a connecting collar which connects the first head piece to the second head piece;

wherein the first and second engaging members are configured so as to connect the element to another base element,
wherein the first head piece and the second head piece comprise surfaces which are portions of substantially spherical surfaces, and
wherein the collar comprises a slit for allowing the insertion/extraction of a cable into/from the base element.

## Description

The present invention relates to an element configured so as to form a cable guide. The present invention also relates to a cable guide formed by connecting together two or more of the above-mentioned elements.

As is known, all electrical equipment powered by an electrical line have an electric power supply cable which connects the said device to the power supply network. To mention just a few examples, a desktop PC is connected to the power supply line via an electric cable. Also, PC displays, printers and, more generally, all the peripherals connected to PCs, TVs, CD-ROM and compact disc readers, wireless telephone base units, etc, are generally connected to respective electric wires. In workstations where a PC is present usually other cables or wires, for example those for connection to the computer network or telephone cables and wires, are also present. Similarly it is very common to combine a separate image and/or sound recording apparatus with a television and these are also connected to the electrical mains and/or to an antenna.

In general, therefore, various situations exist where a cable (for example a power supply cable) must be protected and where two or more cables must be bundled together and kept in an orderly arrangement.

For this purpose so-called cable guides are known.

One of such cable guides is disclosed by the patent US 6,408,888.

The cable guides according to US 6,408,888, however, have various drawbacks. In particular, when the cable guide is assembled, another cable cannot be inserted into the cable guide. Likewise, one of the cables previously inserted cannot be removed from the cable guide. Furthermore, it is not possible to slide the cable only along a part of the cable guide,. In other words, it is not possible for the cable to exit from the guide at a midway point along its length.

In addition, the direction of the cable guide according to the patent US 6,408,888 cannot be adjusted as required so as to adapt to the various requirements and layout of the location where it is installed.

The object of the present invention is to provide an element which can be used to form a cable guide which solves at least part of the above-mentioned drawbacks.

According to a first aspect, the present invention relates to a base element for forming, together with other base elements, a cable guide. The individual base element comprises:
- a first head piece with first engaging members;
- a second head piece with second engaging members;
- a connecting collar which connects the first head piece to the second head piece;
wherein said first and second engaging members are configured so as to connect the element to another element,
wherein said first head piece and said second head piece comprise surfaces which are portions of substantially spherical surfaces, and
wherein said collar comprises a slit for allowing the insertion/extraction of a cable into/from the element.

In one embodiment, the first engaging members comprise two pins projecting outwards from said substantially spherical surfaces, the axis of one of the pins coinciding with the axis of the other pin.

In one embodiment, the second engaging members comprise two holes suitable for receiving the first engaging members and formed in said substantially spherical surfaces, the axis which passes through the centres of the two holes being perpendicular to the longitudinal axis of the base element.

Alternatively, the first engaging members comprise two holes suitable for receiving engaging members of a supporting bracket, the axis which passes through the centres of the two holes being perpendicular to the longitudinal axis of the base element.

Preferably, the first head piece comprises two shell-like surfaces which are substantially portions of a spherical shell. The two shell-like surfaces are essentially the surfaces which remain assuming elimination of a top or bottom spherical cap and two lateral spherical caps from a hollow sphere.

Preferably, the second head piece comprises two shell-like surfaces which are essentially portions of a spherical shell. The two shell-like surfaces are essentially the surfaces which remain assuming elimination of a top or bottom spherical cap and two lateral spherical caps from a hollow sphere.

The slit in the connecting collar is preferably substantially parallel to the longitudinal axis of the element.

Preferably, this slit has an outer receiving surface and an inner receiving surface with two inner curled portions.

According to another aspect, the present invention relates to a cable guide comprising two or more elements of the above-mentioned type.

In one embodiment, the cable guide also comprises an end element.

Preferably, the end element is heavier than the base elements, i.e. is made of a material with a specific weight greater than the specific weight of the material of the base elements.

In one embodiment, the cable guide also comprises a supporting bracket for fixing the cable guide to a surface.

Preferably, two substantially circular, opposite, windows are formed between each base element of the cable guide so as to allow the insertion or extraction of a cable into/from the cable guide.

The present invention will become clearer from the following description, provided by way of a non-limiting example, to be read with reference to the accompanying drawings in which:
- Figure 1 is an exploded axonometric view of two elements for forming a cable guide according to an embodiment of the invention and an end element;
- Figure 2 shows the elements of Figure 1 assembled so as to form a guide;
- Figure 3 is a longitudinally sectioned view of the guide according to Figure 2;
- Figures 4a, 4b, 4c and 4d are, respectively, a front view, side view, top view and longitudinally sectioned view of an element for forming a cable guide according to an embodiment of the invention;
- Figures 5a, 5b, 5c and 5d are various sectioned views of an element for forming a cable guide according to an embodiment of the invention;
- Figure 6 is a longitudinally sectioned view of a cable guide with two elements according to an embodiment of the invention;
- Figure 7 is a cross-sectional view of the cable guide according to Figure 6;
- Figure 8 is a cross-sectional view of a cable guide formed by four elements, illustrating the possibility of forming also ducts which follow a winding path;
- Figure 9 is an axonometric view of a guide according to an embodiment of the present invention which is formed by a certain number of elements, showing also two cables; and
- Figure 10 is an axonometric view of a supporting bracket for engagement with one or two elements according to an embodiment of the present invention, as shown in Figures 10a, 10b and 10c.

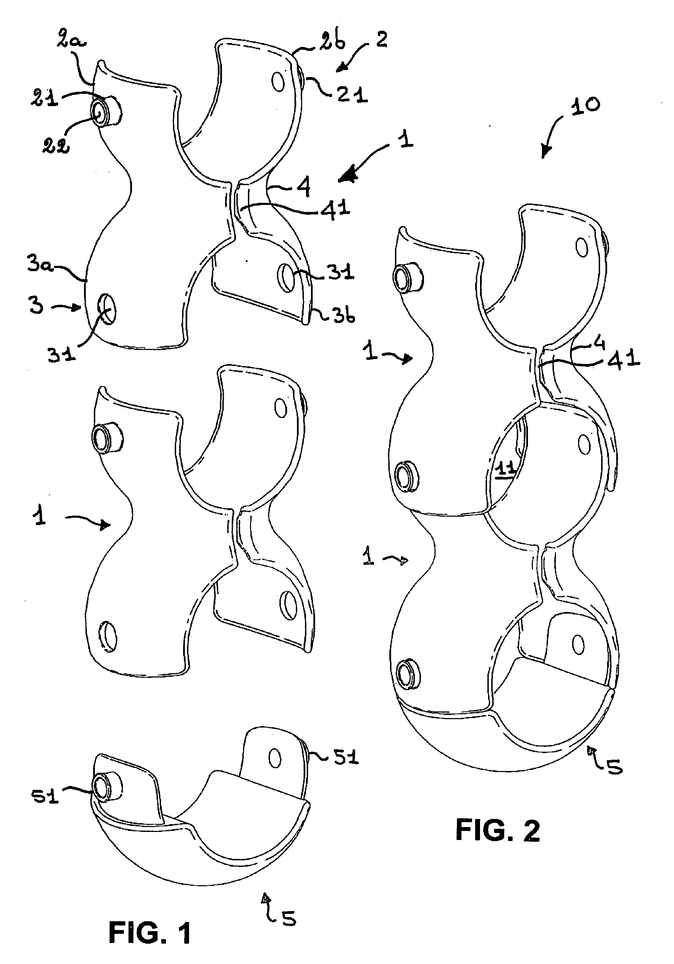

With reference initially to Figures 1 to 5 an element 1 for forming a cable guide 10 according to an embodiment of the invention is described. Each element 1 is preferably a single piece.

Preferably, the element 1 is made of a plastic such as, for example, PC, PA, PS, PP, PET, PETG or ABS. Conveniently, the element 1 may be formed by means of injection-moulding.

The element 1 comprises a first head piece 2 with first engaging members 21, a second head piece 3 with second engaging members 31 and a collar 4 for connecting together the first head piece 2 and the second head piece 3. The engaging members 21, 31 allow engagement of an element 1 with another element 1 or, as will be seen below, with an end element 5 or another special element 6.

The first head piece 2 comprises two shell-like surfaces 2a, 2b which are essentially portions of a spherical shell. More precisely, the two surfaces 2a, 2b form the surfaces which remain assuming the hypothetical elimination of a top (or bottom) spherical cap and two lateral spherical caps from a hollow sphere.

Likewise, the second head piece 3 comprises two shell-like surfaces 3a, 3b which are essentially portions of a spherical surface. More precisely, the two shell-like surfaces 3a, 3b form the surfaces which remain assuming the hypothetical elimination of a top (or bottom) spherical cap and two lateral spherical caps from a hollow sphere.

The outer diameter of the first head piece 2 is preferably smaller than the inner diameter of the second head piece 3

In a first embodiment (Figures 1 to 9), the first engaging members 21 comprise two pins 21 diametrically projecting outwards from the two surfaces 2a, 2b. Preferably, each pin 21 is in the form of a small cylinder with a cylindrical cross-section terminating in a small ring having a diameter greater than the diameter of the cylinder.

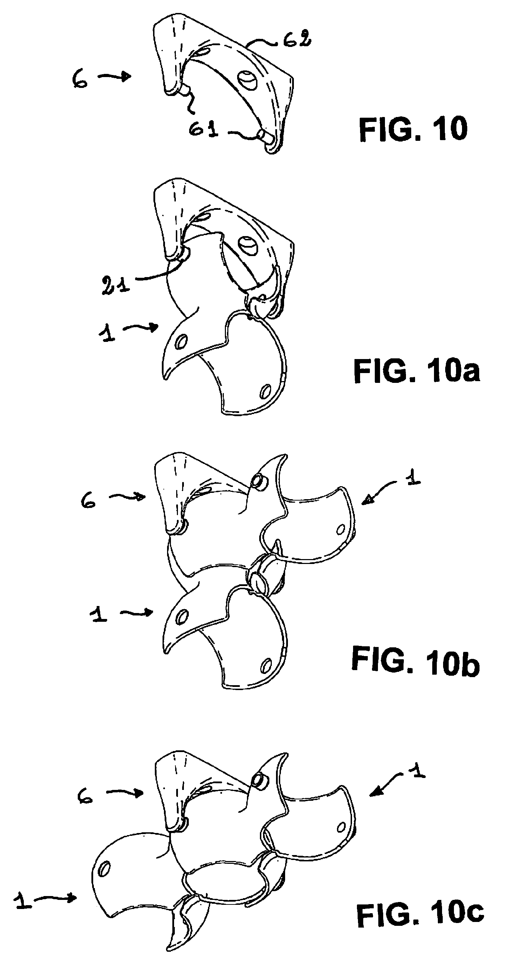

In a second embodiment (Figure 10a) the first engaging members 21 comprise two diametrically opposite holes 22.

The second engaging members 31 comprise two diametrically opposite holes 31. The holes 31 are preferably circular. Preferably, the diameter of the holes 31 is slightly greater than the diameter of the cylinders of the first engaging members 21. Preferably, the diameter of the holes 31 substantially corresponds to the diameter of the rings of the first engaging members. The rings act essentially as retaining elements.

The connecting collar 4 connects together the shell-like surfaces 2a, 2b, 3a, 3b which form the first and second head pieces 2, 3. The connecting collar 4 is interrupted longitudinally and forms a longitudinal slit 41. Preferably, the interruption zone is inwardly curved so as to form a receiving surface. Internally, two curled portions 42 are preferably formed.

By means of the slit 41 in the collar 4, cables 7 can be inserted or removed, once the guide 10 has been assembled, without having to remove even one element 1 of the guide 10.

Figure 2 shows a cable guide 10 assembled with two base elements 1 and an end element 5. In order to join together the two base elements 1 it is sufficient to engage the first engaging members 21 (pins) of the second base element 1 inside the holes 31 of the first base element 1. It is equally well possible to move the two surfaces 2a, 2b of the first head piece 2 towards each other and/or separate the surfaces 3a, 3b of the second head piece 3. In any case, the elasticity properties of the material will cause the surfaces 2a, 2b, 3a, 3b to assume again their original shape and relative position after the deformation force has been released.

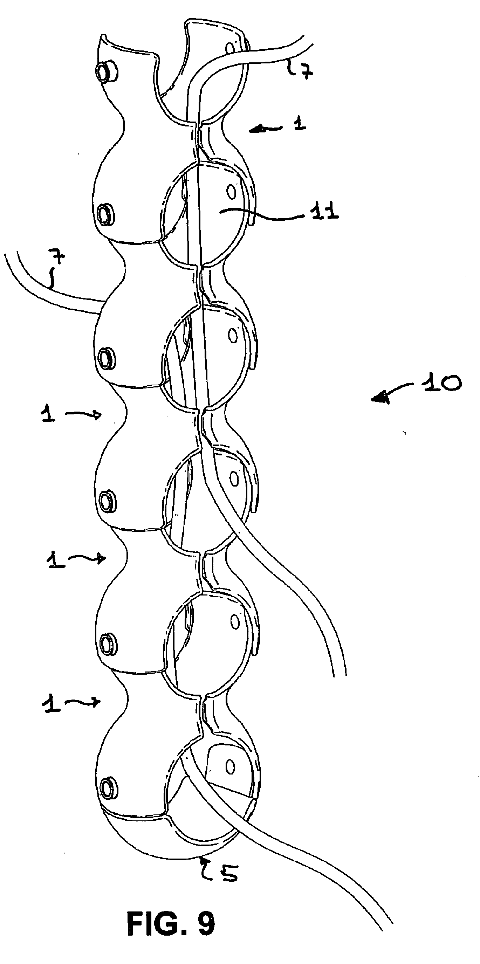

The end element 5 is optional, but it allows the cable guide to be terminated at the ends so as to avoid damage to the cables which emerge from the end part of the cable guide (see also Fig. 9). Moreover, the rounded "cradle" shape of the end element 5 allows it to make contact with the ground (not shown), avoiding damage and allowing adjustment in an optimum manner. The end element 5 may be made of the same material as the base element 1. In one embodiment, the end element 5 is made of a material different from that of the elements 1, for example a material which is heavier or a plastic mixed with a heavier material so as to increase the weight of the end element 5. In a further embodiment of the invention, the end element 5 is made of the material softer than the elements 1 or is externally lined with a soft material.

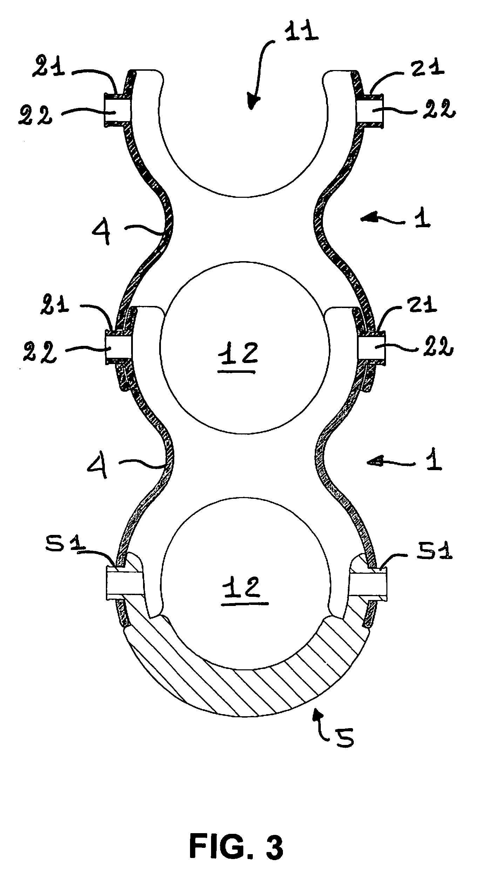

Figure 3 is a longitudinally sectioned view of the cable guide 10 of Figure 2. From this section it can be seen that the central channel 11 able to receive the cables is very wide. It is formed by the space bounded by the shaded edges. It can also be seen that the central channel 11 does not have sharp corners, but only rounded walls which allow easy insertion of the cables and prevent any possible damage thereto. Still with reference to Figure 3, it can be seen how the assembly together of two or more base elements 1 results in the formation of substantially circular windows 12 (when the cable guide 10 is in the vertical position) through which one or more cables can be extracted should they not extend fully from one end to the other of the cable guide 10. The cables 7 may be inserted inside the cable guide 10 via the front wall through the slits 41 or also via the rear wall through the windows 12. In this connection, in order to understand better this concept, reference should be made to Figure 9.

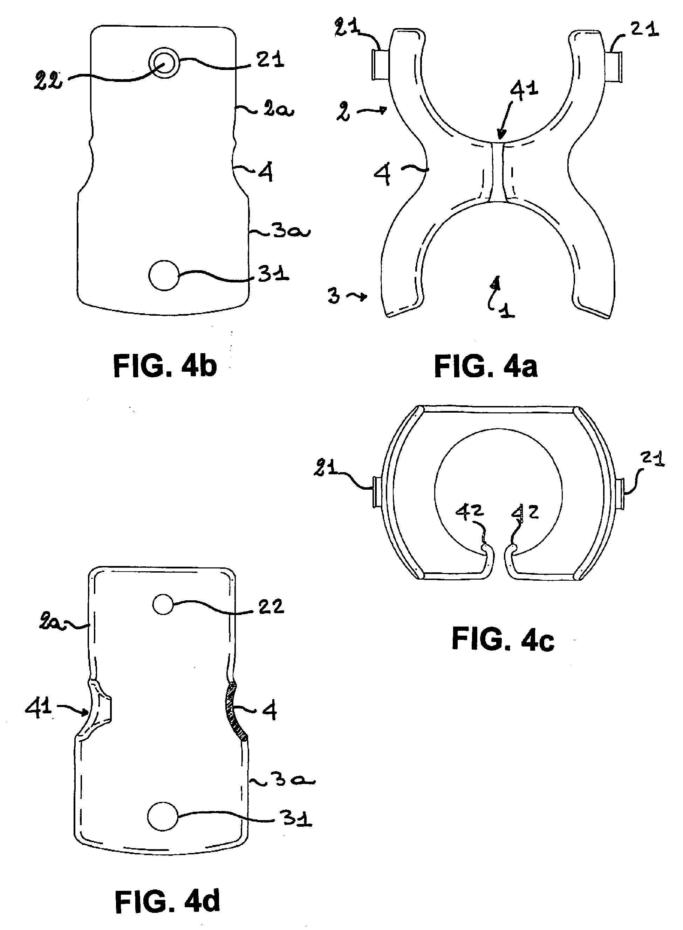

Figure 4a is a front view of a single base element 1 for forming a cable guide 10 according to the present invention. Viewed frontally, the element 1 has a shape substantially in the form of an X. This view also clearly shows the slit 41 in the connecting collar. As mentioned above, the purpose of the slit 41 is to allow the insertion or extraction of a cable 7 even when the cable guide 10 is completely assembled. The configuration of the slit 41 can be clearly seen from Figure 4c (top view) and from Figure 4d (longitudinal section). Figure 4b highlights the difference between the diameter of the first head piece (the top one in the various figures) and the diameter of the second head piece (the bottom one in the various figures): the outer diameter of the first (top) head piece is smaller than the inner diameter of the second (bottom) head piece. This difference in the diameters is also highlighted in Figure 3.

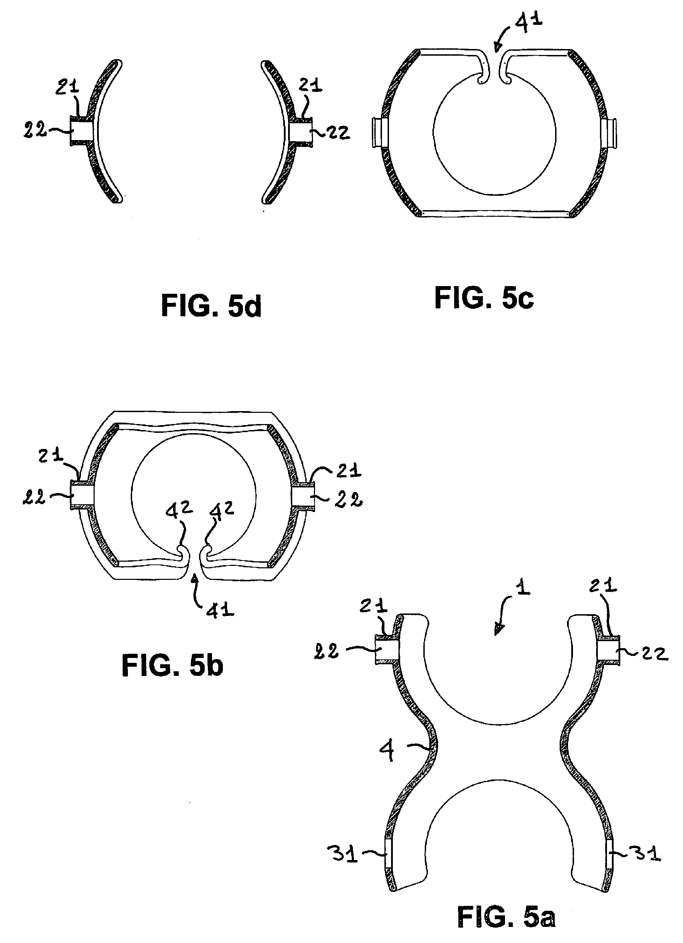

The various Figures 5a to 5d are various sectional views of the base element 1.

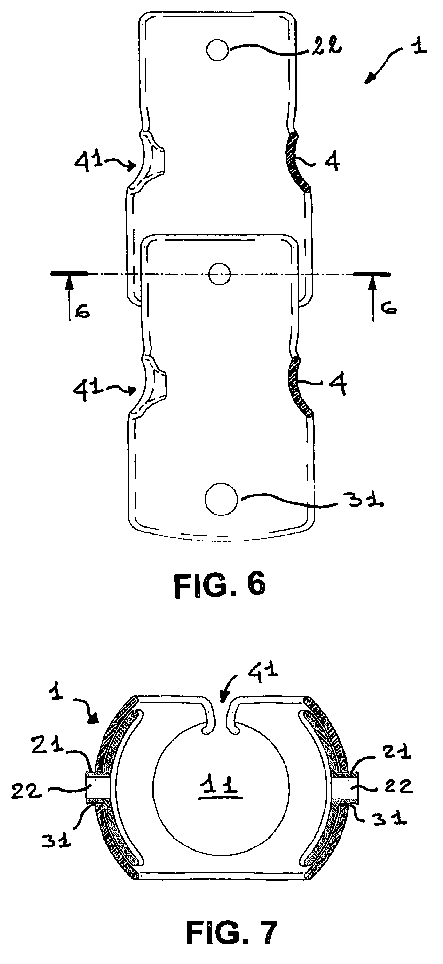

Figure 6 is a longitudinally sectioned view of two base elements 1 connected together. Figure 7 is, instead, a cross-section along the plane perpendicular to the longitudinal axis and passing through the axis of the engaging members 21, 31 connected together.

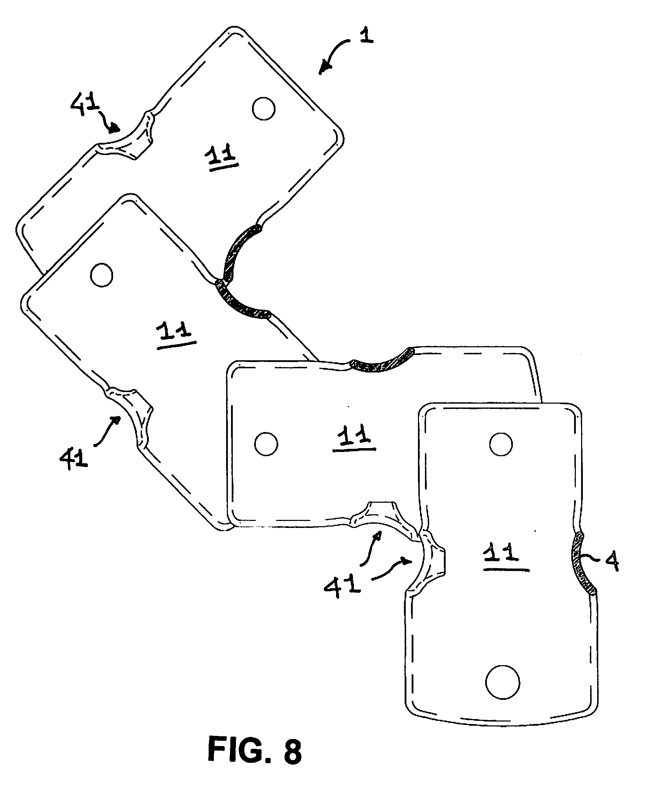

Figure 8 shows, by way of example, a section of a cable guide 10 formed by four base elements 1 directed so as to create a channel following a particularly winding path. It can therefore be understood that, using the elements 1 according to the present invention, it is possible to form cable guides 10 which can be adapted so as to follow linear, curved or angled paths.

One of the main characteristic features of the base element (and the cable guide) according to the invention is the extreme flexibility made possible by the mutually engaging members or joints 21, 31, allowing also right-angle bends to be formed between two base elements as shown in Figure 8.

Figure 9 has already been mentioned previously in the present description. This figure shows a cable guide 10 formed by assembling five base elements 1 and an end element 5 fixed to the bottommost base element 1. Two cables 7 are also partially shown. A first cable 7 enters into the cable guide through its uppermost base element 1 and exits from the cable guide through the window 12 formed between the third and fourth base element. The second cable 7, instead, enters into the cable guide 10 through the window 12 formed between the second and third base element and exits from the guide through the window 12 between the last base element and the end element 5. Obviously, the above configuration is merely an example and is in no way limiting.

Figure 10 shows an axonometric view of a supporting bracket 6. The supporting bracket 6 is used for engagement with one or more base elements 1. For example, Figure 10a shows an supporting bracket 6 engaged with a base element 1 with which then, typically, other base elements 1 (and if necessary an end element 5) will be engaged so as to form a cable guide 10. Figure 10b shows a supporting bracket 6 engaged with two base elements 1 arranged at an angle so as to form a channel 11 which forms a bend.

Figure 10c, by way of a further example, shows a supporting bracket 6 engaged with two base elements 1 arranged substantially horizontally.

The possibility of positioning the supporting bracket 6 in an intermediate position, as shown in Figure 10b without limiting the functionality of the hinging joints and engagement between the mutually engaging members 21, 31 of the base elements 1, as shown in Figure 10c, allows the surfaces of desks to be fitted with channelling ducts which pass horizontally underneath the surface and then "descend" vertically so as to convey the cables down to the ground. A plurality of supporting brackets 6, mounted in an intermediate position between the base elements 1, as shown in Figure 10c, may be advantageously used to support also long sections of a cable guide positioned horizontally.

The supporting bracket 6 is preferably a yoke-like element with a base 62. The base 62 is preferably flat. The base 62 preferably comprises one or two holes for fixing (via screws or the like, not shown) the supporting bracket 6 to a surface (for example to a wall or to a surface/side of a piece of furniture such as a bookshelf, table or desk). The yoke forms a cavity in the form of a circle arc or dome. At the ends of the arms which form the yoke there are two pins 61 directed towards each other. The two pins 61 are intended to engage with the holes 22, 31 of one or more base elements 1 (as shown in Figures 10a, 10b and 10c mentioned above).

With reference to Figure 10a, the two pins 61 are intended to engage with the holes 22 of the pins 21 of a base element 1 when, for example, the supporting bracket 6 is mounted at the end of the cable guide 10.

With reference to Figures 10b and 10c, the supporting bracket 6 may be mounted in an intermediate position along the cable guide 10 and the two pins 61 engage inside the holes 22 of the pins 21 of a first base element 1, which in turn engage inside the holes 31 of a second base element 1 of the guide. The first and second base elements form part of the same cable guide.

## Claims

1. Element (1) for forming a cable guide (10), said element comprising:
• a first head piece (2) with first engaging members (21);
• a second head piece (3) with second engaging members (31);
• a connecting collar (4) which connects the first head piece (2) to the second head piece (3);
wherein said first and second engaging members (21, 31) are configured so as to connect the element (1) to another element (1),
wherein said first head piece (2) and said second head piece (3) comprise surfaces which are portions of substantially spherical surfaces (2a, 2b; 3a, 3b), and
wherein said collar (4) comprises a slit (41) for allowing the insertion/extraction of a cable into/from the element (1).

2. Element (1) according to Claim 1, wherein said first engaging members comprise two pins (21) projecting outwards from said substantially spherical surfaces (2a, 2b), the axis of one of the pins (21) coinciding with the axis of the other of the pins (21).

3. Element (1) according to Claim 1 or 2, wherein said second engaging members comprise two holes (31) suitable for receiving the said first engaging members and formed in said substantially spherical surfaces (3a, 3b), the axis which passes through the centres of the two holes being perpendicular to the longitudinal axis of the element (1).

4. Element (1) according to Claim 1, wherein said first engaging members comprise two holes (22) suitable for receiving engaging members of a supporting bracket (6), the axis which passes through the centres of the two holes being perpendicular to the longitudinal axis of the element (1).

5. Element (1) according to any one of the preceding claims, wherein said first head piece (2) comprises two shell-like surfaces (2a, 2b) which are substantially portions or strips of a spherical shell, said two shell-like surfaces (2a, 2b) being essentially the surfaces which remain assuming elimination of a top or bottom spherical cap and two lateral spherical caps from a hollow sphere (Fig. 1).

6. Element (1) according to any one of the preceding claims, wherein said second head piece (3) comprises two shell-like surfaces (3a, 3b) which are essentially portions or strips of a spherical shell, said two shell-like surfaces (3a, 3b) being essentially the surfaces which remain assuming elimination of a top or bottom spherical cap and two lateral spherical caps from a hollow sphere (Fig. 1).

7. Element (1) according to any one of the preceding claims, wherein said slit (41) of the connecting collar (4) is substantially parallel to the longitudinal axis of the element (1).

8. Element (1) according to any one of the preceding claims, wherein said slit (41) has an outer receiving surface and an inner receiving surface with two inner curled portions (42).

9. Cable guide (10) comprising two or more elements (1) according to any one of the preceding claims.

10. Cable guide (10) according to Claim 9, also comprising an end element (5).

11. Cable guide (10) according to Claim 10, wherein said end element is made of a material with a specific weight greater than the specific weight of the material of the elements (1).

12. Cable guide (10) according to Claim 9, 10 or 11, also comprising a supporting bracket (6) for fixing the cable guide (10) to a surface.

13. Cable guide (10) according to any one of Claims 9 to 12, wherein two substantially circular, opposite, windows (12) are formed between each element (1) so as to allow the insertion or extraction of a cable into/from the cable guide (10).
